(19) Europäisches Patentamt / European Patent Office / Office européen des brevets

(11) **EP 3 400 737 B1**

(12) **EUROPEAN PATENT SPECIFICATION**

(45) Date of publication and mention
of the grant of the patent:
**25.09.2019 Bulletin 2019/39**

(51) Int Cl.:
**H04W 48/16** *(2009.01)* **H04W 36/00** *(2009.01)*
**H04W 52/02** *(2009.01)* **H04W 84/12** *(2009.01)*

(21) Application number: **16705840.3**

(22) Date of filing: **07.01.2016**

(86) International application number:
**PCT/SE2016/050003**

(87) International publication number:
**WO 2017/119828 (13.07.2017 Gazette 2017/28)**

(54) **METHODS AND APPARATUSES ENABLING DEPLOYMENT INFORMATION CONTROLLED CONNECTION PROCEDURES IN A WIRELESS NETWORK**

VERFAHREN UND VORRICHTUNGEN ZUR ERMÖGLICHUNG DES EINSATZES VON INFORMATIONSGESTEUERTEN VERFAHREN IN EINEM DRAHTLOSEN NETZWERK

PROCÉDÉS ET APPAREILS D'EXÉCUTION DE PROCÉDURES DE CONNEXION CONTRÔLÉES PAR DES INFORMATIONS DE DÉPLOIEMENT DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.11.2018 Bulletin 2018/46**

(73) Proprietor: **Telefonaktiebolaget LM Ericsson (publ)**
**164 83 Stockholm (SE)**

(72) Inventors:
• **MESTANOV, Filip**
**SE-191 49 Sollentuna (SE)**
• **HIERTZ, Guido**
**52066 Aachen (DE)**
• **LINDHEIMER, Christofer**
**SE-583 36 Linköping (SE)**

(74) Representative: **Ericsson**
**Patent Development**
**Torshamnsgatan 21-23**
**164 80 Stockholm (SE)**

(56) References cited:
**EP-A2- 1 349 412      WO-A2-2004/054283**
**US-A1- 2004 137 908     US-A1- 2013 150 012**
**US-A1- 2015 350 873**

• **LEI WANG (INTERDIGITAL COMMUNICATIONS): "Discussions about FILS Discovery Frame Content Design ; 11-12-0741-01-00ai-discussions-about-fils-discovery-frame-content-design", IEEE SA MENTOR; 11-12-0741-01-00AI-DISCUSSIONS-ABOUT-FILS - DISCOVERY-FRAME-CONTENT-DESIGN, IEEE-SA MENTOR, PISCATAWAY, NJ USA, vol. 802.11ai, no. 1, 15 July 2012 (2012-07-15), pages 1-42, XP068039200, [retrieved on 2012-07-15]**

## Description

## TECHNICAL FIELD

The proposed technology generally relates to methods and devices for managing connection procedures in a Wireless Local Area Network, WLAN, comprising several serving Access Points, APs, providing services to wireless communication devices within the WLAN. More specifically it relates to methods, devices and computer programs that provide mechanisms whereby deployment information relating to the WLAN may be used when managing connection procedures in the WLAN.

## BACKGROUND

Wi-Fi, which is also known as WLAN, these terms will be used interchangeably throughout this application, is standardized. The standard regulate the Access Points' or wireless terminals' physical layer, MAC layer and other aspects to secure compatibility and interoperability between access points and portable terminals, also referred to as stations, STA's. Wi-Fi generally operates in unlicensed bands, and as such, communication over Wi-Fi may be subject to interference sources from any number of both known and unknown devices. Wi-Fi is commonly used as wireless extensions to fixed broadband access, e.g., in domestic environments and hotspots, like airports, train stations, and restaurants.

With the growing need to migrate the WLAN system from the concept of one AP with several connected communication devices or stations, also referred to as STAs, to a network of APs connecting many STAs, both stationary and mobile ones, there arises a need to provide seamless transitions between APs in such a way that a wireless communication device such as a STA that is connected to one AP can transition to another AP without perceived interruption. It is in particular a need to find mechanisms to counter the problem with so called sticky clients. This problem occur when a wireless communication device connects to an AP, and "sticks" to that AP even though alternative APs provide better services or signal strengths.

Document EP 1 349 412 A2 relates to the dynamic setting of carrier sense thresholds in a WLAN AP. The AP measures signal quality from surrounding APs and generates corresponding defer threshold value and roaming threshold value, both are conveyed to the STA either using broadcast or unicast messages thereby improving the scanning behaviour of the UE with respect to energy savings.

## SUMMARY

According to a general object of the proposed technology, there are proposed mechanisms whereby wireless communication devices, e.g. STAs, connected to an Access Point in the WLAN, are enabled to take informed decisions whether to initiate a scan for an alternative serving AP. This improves the overall network performance since it ensures that a wireless communication device may make a timely transition to an alternative serving AP providing superior communication. The proposed mechanisms also provides a counter measure to the sticky client behavior.

The present invention defines a method performed by an access point according to independent claim 1, a method performed by a wireless communication device according to independent claim 3, an access point according to independent claim 14 and a wireless communication device according to independent claim 15.

Preferred embodiments are defined by the dependent claims.

By providing the wireless communication device with deployment information the wireless communication device is enabled to decide suitable moments to initiate a scanning procedures to search for alternative Access Points to connect to. This will in turn ensure that the wireless communication device is always able to request a timely connection to an AP with a strong signal strength. Particular advantages with the proposed technology is that the suggested mechanism provides countermeasures to the problems related to sticky clients.

Other advantages will be appreciated when reading the detailed description.

## BRIEF DESCRIPTION OF THE DRAWINGS

The embodiments, together with further objects and advantages thereof, may best be understood by making reference to the following description taken together with the accompanying drawings, in which:

FIG. 1 is a schematic illustration of a Wireless Local Area Network, WLAN, having several Access Points.

FIG. 2 is a flow diagram providing a schematic illustration of a method performed by a wireless communication device according to the proposed technology.

FIG. 3 is a flow diagram providing a schematic illustration of an embodiment of a method performed by a wireless communication device according to the proposed technology.

FIG. 4A is a block diagram illustrating a particular embodiment of an Access Point, AP according to the proposed technology.

FIG. 4B is a block diagram illustrating another particular embodiment of an Access Point, AP according to the proposed technology.

FIG. 5 is a block diagram illustrating yet another particular embodiment of an Access Point, AP according to the proposed technology.

FIG. 6 is a is a block diagram illustrating how a computer program is used in an Access Point, AP, according to particular embodiment of the proposed technology.

FIG. 7A is a block diagram illustrating a particular embodiment of a wireless communication device according to the proposed technology.

FIG. 7B is a block diagram illustrating another particular embodiment of a wireless communication device according to the proposed technology.

FIG. 8 is a block diagram illustrating yet another particular embodiment of a wireless communication device according to the proposed technology.

FIG. 9 is a block diagram illustrating how a computer program is used in a wireless communication device according to particular embodiment of the proposed technology.

FIG. 10 is a block diagram illustrating a particular embodiment of an apparatus for controlling the operations of an Access Point, AP, according to the proposed technology.

FIG. 11 is a block diagram illustrating a particular embodiment of an apparatus for controlling the operation of a wireless communication device according to the proposed technology.

FIG.12 is a signaling diagram illustrating the signaling between a serving Access Point and a wireless communication device and the signaling between the wireless communication device and an alternative Access Point.

## DETAILED DESCRIPTION

Throughout the drawings, the same reference designations are used for similar or corresponding elements.

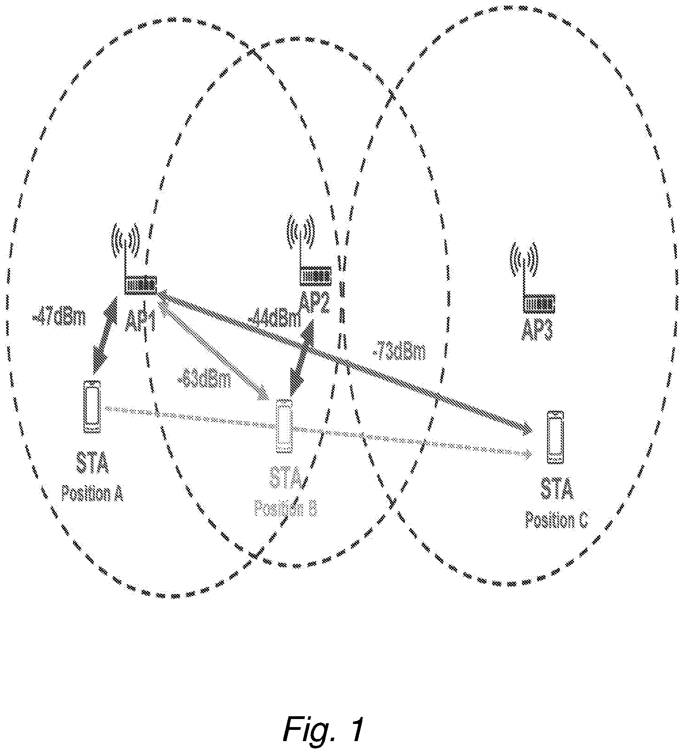

For a better understanding of the proposed technology, it may be useful to begin with a brief system overview and/or analysis of the technical problem. To this end we refer to FIG.1.

FIG.1 provides a schematic illustration of a Wireless Local Area Network, WLAN, comprising a plurality of Access Points, APs, AP1, AP2, and AP3. The different APs are configured to provide services to wireless communication devices within the WLAN. The wireless communication device is referred to as a STA in FIG.1. STA is a commonly used abbreviation for station, and the terms wireless communication device and STA will be used interchangeably in what follows.

In order for a wireless communication device connected to a particular AP within the WLAN to perform an efficient and timely transition to an alternative AP, the wireless communication device may continuously monitor the signal strength that it receives from its serving AP, that is, the one it is currently connected to, and when the signal strength drops below a certain level, hereon referred to as roaming threshold, the wireless communication device will look for transition candidate or target AP, that is, search for APs to which the wireless communication device can connect. When the wireless communication device finds an appropriate AP with sufficiently high signal strength, it may perform a transition to that AP.

In a very dense WLAN with many APs such as a stadium, a train station, an office, etc., the network would be designed in such a way that wireless communication devices are always enjoying good RSSI, Received Signal Strength Indicator, across the entire network. And since the signal strength is good across the whole network, the wireless communication devices will less frequently look for transitioning to another AP. So then when a wireless communication device connects to a particular AP, it tends to "stick" to that AP until the RSSI level drops below the roaming threshold. It may even be that the device would not scan for alternative networks until the measured RSSI falls below this level. Hence the wireless communication device would not start looking for alternative APs to transition to before the signal strength has fallen below the roaming threshold. This is, as has been described earlier, often referred to as the "sticky client" or "sticky STA" problem.

Details of the problem are schematically depicted in FIG. 1. Here the wireless communication devices, i.e. a STA, moves along the dashed line. Under ideal behavior, the STA should have scanned and connected to AP2 when it was at Position B, since the signal level to AP2 (-44 dBm, decibel-milliwatts) would have been much better than the signal level to AP1 (-63 dBm). However, due to the still sufficiently high signal level to AP1 at this position, roaming procedures at the STA are not triggered until the signal level degrades to a sufficiently low level, e.g., -70 dBm, which represent the roaming threshold of an iPhone 6. The STA would start scanning for a target AP somewhere around Position C, where it would possibly find AP3 as the best transition candidate.

An object of the proposed technology is to provide a mechanism whereby a wireless communication device, such as a STA, may take an informed decision whether to initiate a scan for an alternative serving AP. This object is obtained by means of a method whereby a wireless communication devices is provided with deployment information from the serving AP which will enable the wireless communication device to take an informed decision, based on the provided deployment information, whether to initiate a scan for an alternative serving AP. Deployment information refer to information relating to the infrastructure of the network as well as to the topology of the network, i.e. the network topology. Infrastructure in turn relates to information specifying standalone respectively access controller operated APs while topology information relates to the position and the corresponding neighborhood of the various Access Points within the WLAN. Deployment information may in particular refer to information that specifies the distribution of wireless communication devices and Access Points, APs, within the WLAN, e.g. information relating to the positions of the various devices and APs, together with other user information such as user performance and user requirement information. It may for example specify the coverage area of the deployment, including parameters relating to the spatial extension of the deployment. It may beside these examples also refer to more specific apparatus information relating to the multiple APs used within the network. Examples of the latter relate to device specific information such as the technical details of the various Access Points used within the WLAN, as well as the possible transmission schemes to be used during communication within the wireless local area network, WLAN, it may in particular relate to frequency information such as e.g. the frequencies used during transmission, bandwidth, etc.

More specific examples of deployment information or information comprised in the deployment information will be provided in the embodiments that follow. It should be noted that the various concrete examples of deployment information given herein may be combined when deemed beneficial.

The advantages that are achieved by providing the wireless communication device, e.g. a STA, with deployment information is that the wireless communication device may get valuable information regarding when it is preferable to start a search for other APs to connect to, rather than either constantly searching/scanning or sending beacons or initiate a scanning when the RSSI value has fallen below the roaming threshold. It is furthermore valuable information from the perspective of the wireless communication device in so far that the wireless communication device is provided with indications on when and where there may be a better AP to connect to, to thereby avoid the above described sticky client behavior.

The proposed technology therefore provides a method performed by an Access Point, AP, in a Wireless Local Area Network, WLAN, comprising a plurality of APs. The method comprises the step of providing a wireless communication devices served by the AP with deployment information relevant to the WLAN to enable the wireless communication device to decide, based at least partially on the deployment information, whether to initiate a scan for a different AP in the WLAN to connect to.

According to a particular embodiment of the proposed technology there is provided a method wherein the deployment information comprises the roaming threshold within the WLAN.

By having the AP communicate the roaming threshold to a wireless communication device enables the wireless communication device to take an informed decision whether to initiate scanning procedures for the purpose of finding a transition candidate, i.e. finding an alternative serving AP. The roaming threshold reflects the network density and is usually one of the most important design parameter during the planning deploying of a WLAN. By incorporating the roaming threshold in the deployment information provided to the wireless communication device the method also provides for setting the roaming threshold in a more dynamically way. It may in particular be possible to provide a dynamically set roaming threshold whose value has been set depending on the activity of the Access Point.

Another possible embodiment provides a method wherein the deployment information comprises the minimum grade of service, MOS, for which the WLAN has been designed and deployed.

Still another possible embodiment provides a method wherein the minimum grade of service relates to Modulation and Coding Scheme, MCS, or transmission rate.

According to this embodiment, the AP communicates to the wireless communication device, e.g. a STA, the minimum grade of service, i.e. in terms of MCS or a transmission rate, for which the network has been designed and deployed. Even though the WLAN standard may allow for operation at very low rates, i.e., when the signal level is low, usually due to the STA being either in non-favourable radio conditions or simply far away from the AP, in many real-life deployments some of the lower rates might be undesired. If the AP density is large enough, a network operator might design the WLAN in such a way that the minimum grade of service intended for operation in this network is much larger than the minimum supported by the standard. In many dense networks nowadays, MCS7 is the lowest rate for which the network has been designed.

According to an alternative embodiment there is provided a method, wherein the deployment information comprises the client density for which the WLAN has been designed.

According to this particular embodiment of the proposed technology, the AP communicates to the wireless communication device the client density for which the network has been designed. The AP can either indicate the average or maximum client density, this may for example be, 25 wireless communication devices per AP.

If the client density is exceeded for certain APs, the wireless communication device may look for other less loaded neighbour APs.

According to a particular embodiment of the proposed technology there is provided a method wherein the client density comprises the maximum density or the average client density of the AP, or a combination of the maximum and the average density. Information about the client density will enable the wireless communication device to take an informed decision whether to initiate a scan for an alternative AP within the WLAN to connect to.

Yet another alternative of the proposed method, provides a method wherein the deployment information comprises information whether the WLAN is controlled by an AP controller, AC. According to this particular embodiment of the proposed technology, the AP communicate to the wireless communication device the type of deployment - whether the network is controlled by an AP controller, AC, or whether a controller is not present. In many situations, networks which feature an AC may implement more sophisticated functions for load balancing, timely roaming, etc. In case both the network and the client implement the same function, e.g., load balancing, it may be beneficial for the network to communicate this to the client, so that conflicts may be avoided.

According to an optional embodiment a method is provided wherein the deployment information is provided to the wireless communication device in the form of broadcast signaling.

According to a particular version of an optional embodiment there is provided a method, wherein the broadcast signaling is performed by using a beacon frame or a FILS discovery frame.

An alternative optional embodiment provides a method wherein the deployment information is provided to the wireless communication device in the form of unicast signaling.

A particular version of the optional embodiment provides a method wherein the unicast signaling is performed by using any of the following signaling formats: a probe response, an association response, a re-association response frame or an action frame.

By way of example, the proposed technology also provides for an embodiment of the method wherein the deployment information is provided to the wireless communication device in the form of an information element included in at least one of the frames.

According to this particular embodiment, the deployment information may be communicated to the wireless communication device via a new information element, according to the earlier cited 802.11 standard, included in one, several, or all of the aforementioned frames.

Another possible embodiment of the proposed technology provides a method wherein the deployment information is provided to the wireless communication device in the form of a vendor specific information element.

A particular embodiment of the proposed method provides a method wherein the deployment information comprises a list of tuples, the tuples comprising a received signal strength indicator, RSSI, threshold and a background scanning interval to enable the wireless communication device to scan the background scanning interval in order to discover at least one alternative AP in the WLAN to request a connection to.

According to this embodiment the WLAN AP provides the wireless communication device with deployment information comprising a list of tuples, i.e. a sequence of information elements. Each tuple may address a single wireless communication device, e.g. a STA or a group of wireless communication devices. Each such tuple may comprise an RSSI threshold level and a background scanning interval. Wireless communication devices such as a WLAN STA use background scanning to discover APs in their proximity. Depending on the tuple indicated by the WLAN AP the wireless communication device may set this background scanning interval according to the RSSI level measured. Measuring a high RSSI level the wireless communication device will scan less often than at a low RSSI level where the background scanning rate increases in anticipation of a link breakage following soon.

The background scanning intervals comprised in the list of tuples may in a particular example refer to the frequency with which the wireless communication device should perform either passive or active scanning procedures, i.e., it specifies how often the wireless communication device should perform scanning for alternative Access Points.

Another possible embodiment provides for a method wherein the deployment information comprises an indication of RSSI as measured by the AP in the uplink.

This particular embodiment of the proposed technology may in particular be related to the signal thresholds at which the AP will consider de-association, as described below, it may also be beneficial to add an indication of the measured RSSI in uplink, as measured in the AP. This would be a reference for the wireless communication device to consider, and would provide a means for better handling of the reciprocity aspects of signalling a threshold that is in fact based on measurements by the AP.

According to a particular embodiment of the proposed method there is provided a method wherein the deployment information provided to the wireless communication device also comprises a de-association threshold indicating at which RSSI value the wireless communication device will be de-associated from the AP.

According to this embodiment the WLAN AP may signal an indication threshold at which it will consider de-association of a WLAN STA. The signalling may for example be done by use of the aforementioned frames. In several real world scenarios reciprocal channel conditions may be assumed so that a wireless communication device, such as a STA, in a WLAN may expect to be at risk to be disassociated in case the WLAN AP's signal strength that the WLAN STA measures falls below the indicated value. Hence, the WLAN AP can guide a wireless communication device within the WLAN to consider AP transitioning.

According to yet another embodiment of the proposed technology the WLAN AP may use the aforementioned frames, or some other means of signalling to the wireless communication device, to provide an indication of a duration that a wireless communication devices, such as a WLAN STA, may tolerate to experience lower RSSI levels before it trigger an AP transitioning process. Indicating such duration allows the wireless communication device to remain connected in case channel conditions are varying or fluctuating.

Yet another particular embodiment provides a method wherein the de-association threshold is set based on information about the deployment information. The de-association threshold to be set by the AP could be tuned in a number of different ways to reflect the current network deployment. One possibility is to base the thresholds on knowledge of the deployment. In some situations however, other aspects may also be considered, such as load in the different Basic Service Sets, BSS's, success ratio of transmissions to a certain wireless communication device etc. These aspects may be advantageous if the network deployment information to be reflected is sent dedicated to a wireless communication device and not part of a broadcast message.

The deployment information of the described embodiments may be provisioned to the AP by an external entity. One option is to provision the deployment information in a static or semi-static manner, where an O&M system, Operation and Maintenance system, informs APs on the network deployment and provides them with the deployment information. Another option is to provide the deployment information on a more dynamic basis, where for example a central controller can determine the optimal roaming threshold for a particular AP. based on radio events, e.g., roaming, in the network. Yet another option is for the AP to derive the deployment information on its own, based on the radio events it observes.

The proposed technology also provides a method performed by a wireless communication device that complements the above described method. The method performed by the wireless communication device comprises to obtain the deployment information relating to the WLAN in which it is served, and utilizing the provided information to take an informed decision whether to look out for an alternative serving Access Point.

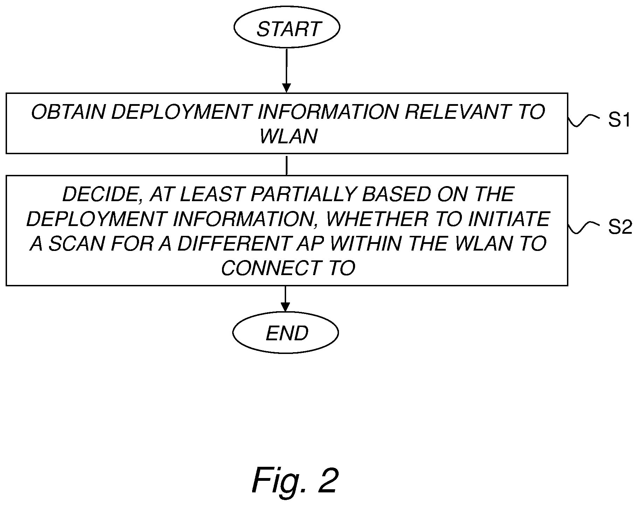

FIG.2 is a flow diagram illustrating the proposed method. It illustrates a method performed by a wireless communication device, served by an Access Point, AP, in a Wireless Local Area Network, WLAN, comprising a plurality of APs. The method comprises the step S1 of obtaining deployment information relevant to the WLAN. The method also comprises the step S2 of deciding, based on the obtained deployment information, whether to initiate a scan for a different AP within the WLAN to connect to.

The proposed technology therefore provides a method of operating a wireless communication device whereby the various method steps enables the wireless communication device to take an informed decision of when to begin a scan for an alternative serving Access Point. The decision is at least partially based on obtained deployment information. The deployment information may in a particular embodiment be obtained from the serving Access point. Another possibility is however that the deployment information is obtained from another agent within the network, such as a control node or alike.

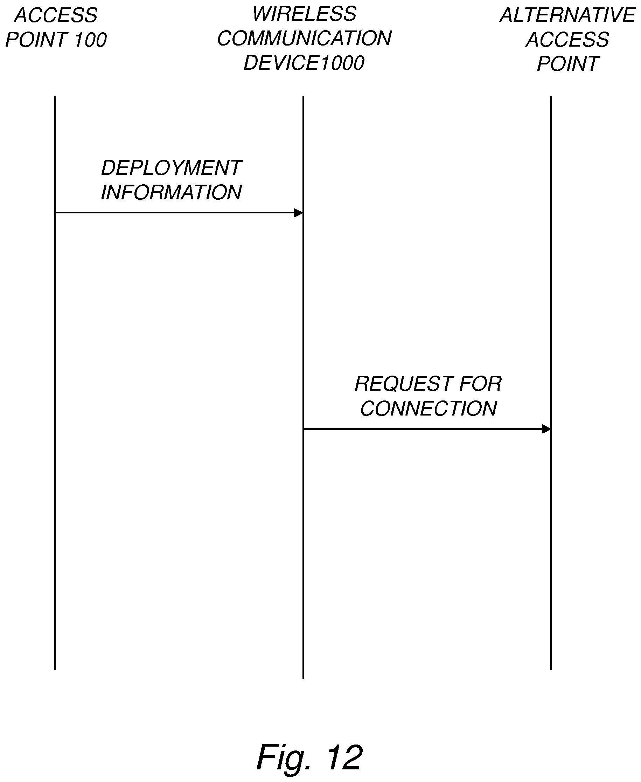

FIG.12 provides an illustrating signaling diagram illustrating the overarching principle. A first Access Point, Access Point 1, provides the wireless communication device with deployment information, thus enabling the wireless communication device to take an informed decision whether to initiate a scan for a new serving Access Point. In FIG.12 is the new Access Point denoted Access Point 2. If the deployment information and the subsequent scanning provides reasons for the wireless device to change to a new serving Access Point, the wireless device may initiate a connection procedure to the new Access Point by means of e.g. a connection request.

According to a possible embodiment of the proposed technology there is provided a method, where the obtained deployment information comprises information relating to any of the following: the roaming threshold within the WLAN, the minimum grade of service for which the WLAN has been designed and deployed, the client density for which the WLAN has been designed and information relating whether the WLAN is controlled by an AP controller, AC.

This particular embodiment illustrates various possible contents comprises in the deployment information. The wireless device may make a decision whether to initiate a scan for a new serving Access Point based on each single one of the proposed contents or based on a combination of the same. With reference to FIG.1 a particular example will be provided relating to the case where the deployment information comprises the roaming threshold, i.e., a particular signal level, for example X dBm, decibel-milliwatt. X refers to the numerical value of the roaming threshold. The roaming threshold has been communicated to the wireless communication device, i.e. a STA in FIG.1, by the WLAN AP. When receiving or obtaining the roaming threshold is the STA connected to AP1 and may be considered to experience a signal level that is well above the roaming threshold. However, as the STA starts moving about the premises the signal level will start to degrade. A STA is capable of observing or measuring the received signal level with every frame it exchanges with the AP. At Position B, the STA observes that the signal level it receives from AP1 is lower than the provided X dBm threshold. Hence the STA may decide to trigger a scanning for an alternative AP to connect to, that is, the STA will initiate discovery procedures for alternative APs. The STA may then perform active and/or passive scanning and may for example find AP2. Having found an alternative AP that provides a better signal level than AP1, the STA may request a connection to AP2 and transition to AP2.

With reference to FIG.1 another particular example will be provided relating to the case where the deployment information comprises minimum grade of service for which the WLAN has been designed and deployed. Deployment information comprising the grade of service for which the network has been designed, e.g.

MCS Y, Y is the numerical value of the MCS, may be provided to the wireless communication device, i.e. a STA in FIG.1, by the WLAN AP that the STA is currently connected to, that is, AP1. Consider the case where the STA roams about the premises. At a certain point it may observe that it is experiencing a grade of service that is lower than the MCS Y provided by AP1. This information may be used by the STA to decide whether to trigger the STA to initiate a scanning for an alternative AP within the WLAN to connect to. That is, whether the STA will start a discovery procedure. Such scanning procedure may result in that the STA discovers AP2. The STA associates to AP2 and may experience whether the grade of service is better or equal to the provided threshold MCS Y.

With reference to FIG.1 still another particular example will be provided relating to the case where the deployment information comprises the client density for which the WLAN has been designed. The client density, e.g. Z STAs/AP, Z is the numerical value of the client density, for which the network has been designed for is communicated to the wireless communication device, i.e. a STA in FIG.1, by AP1, by which the STA is currently served. Over time, the number of clients associated to AP1 may grow beyond the Z STAs/AP number, so the STA may, based on deployment information comprising the client density, initiate a scanning for an alternative AP that is less populated, that is, the STA will begin discovery procedures in order to find less populated APs. The STA may find AP2, which provides comparable service, but is less loaded. The STA may then associate to AP2, that is, connect to AP2.

With reference to FIG.1 yet another particular example will be provided relating to the case where the deployment information comprises deployment information comprises information whether the WLAN is controlled by an AP controller, AC. The wireless communication device, i.e. a STA in FIG.1, may be informed by means of the particular deployment information that it is currently connected to a network where an AC is present. The STA may assume that this network provides guidance or steering information when it comes to inter-AP transitions, whereby it may determine that it is not necessary to perform scanning procedures in order to discover APs which could provide better service. The STA may initially be connected to AP1, but it will soon start to roam around. The network, the AC or coordination between the APs, detects that the grade of service provided to the STA degrades, whereby the AP1 sends a suggestion to the STA to move to AP2. The STA may thus decide based on the provided information whether to associate with AP2.

This particular embodiment illustrates various possible contents comprised in the deployment information. The wireless device may make a decision whether to initiate a scan for a new serving Access Point based on each single one of the proposed contents or based on a combination of the same. This will be described in detail in a later section.

According to another possible embodiment of the proposed technology there is provided a method, wherein the deployment information is obtained from broadcast signaling from the serving AP.

According to yet another possible embodiment of the proposed technology there is provided a method, wherein the deployment information is obtained from broadcast signaling using a beacon frame or a Fast Initial Link Setup, FILS, discovery frame.

By way of example, the proposed technology provides a method wherein the deployment information is obtained from unicast signaling from the serving AP.

A particular embodiment of the proposed technology provides a method wherein the deployment information is obtained from unicast signaling performed by using any of the following signaling formats: a probe response, an association response, a re-association response frame or an action frame.

An optional embodiment of the proposed technology provides a method wherein the deployment information is obtained from a vendor specific information element comprised in a message transmitted from the serving AP.

An exemplary embodiment of the proposed method provides a method wherein the obtained deployment information also comprises a list of tuples, the tuples comprising a received signal strength indicator, RSSI, threshold and a background scanning interval and wherein the method comprises the step S2 of deciding, based on the RSSI threshold, whether to scan the background scanning interval for an alternative AP in the WLAN to request a connection to.

According to this particular embodiment of the proposed method, the wireless communication device that is addressed with the tuples, uses the information content in the tuple to determine whether to perform measurements. A particular advantage achieved by obtaining information about the background scanning interval relies on the fact that the more often the wireless communication device performs a scanning, the better the chance it has to discover new APs in a timely fashion. The scanning procedure, e.g. the transmission of probes, is however quite power consuming and it is therefore beneficial for the wireless communication device to obtain background scanning interval information that provides instructions on how often a scanning should be performed, and preferably also in what frequency range. This will reduce the power consumption of the wireless communication device since a more targeted scanning can be made.

If the wireless device for example measures the AP's beacon frame, which is a regularly transmitted management frame, typical transmission interval is every 102.4 ms, millisecond, and finds the signal strength of the beacon frame at a level that matches the RSSI value provided in the tuple then the wireless communication device may decide that it will schedule a scan for other, neighboring APs at a periodicity also indicated in the tuple. A particular example of scanning relates to a procedure during which the wireless communication device announces to the AP currently serving it that it is in power save mode. The AP may thus buffer all downlink data for this particular wireless communication device. With all traffic to the wireless communication device being buffered the device can tune to other frequency channels. On the other frequency channels the wireless communication device may listen to beacon frames to determine the RSSI level at which the wireless communication device may receive other APs. This is denoted as off-channel scanning. The wireless communication device may also scan for other APs' beacon frames on the frequency channel that its currently serving AP operates on but no special mechanism is needed for the wireless communication device to do this on-channel scanning. Using on-/and off-channel scanning the wireless communication device becomes aware of its neighborhood. If the wireless communication device moves it will be able to select a more appropriate AP to roam to. Thus, the wireless communication device may minimize the period that it is not connected to any AP, thereby leaving the old AP, tuning to another frequency channel, sending association information on the new frequency channel, and finally joining an AP on the new frequency channel.

A possible embodiment of the proposed method provides a method wherein the deployment information provided to the wireless communication device also comprises a de-association threshold indicating at which RSSI value the wireless communication device will be de-associated from the AP.

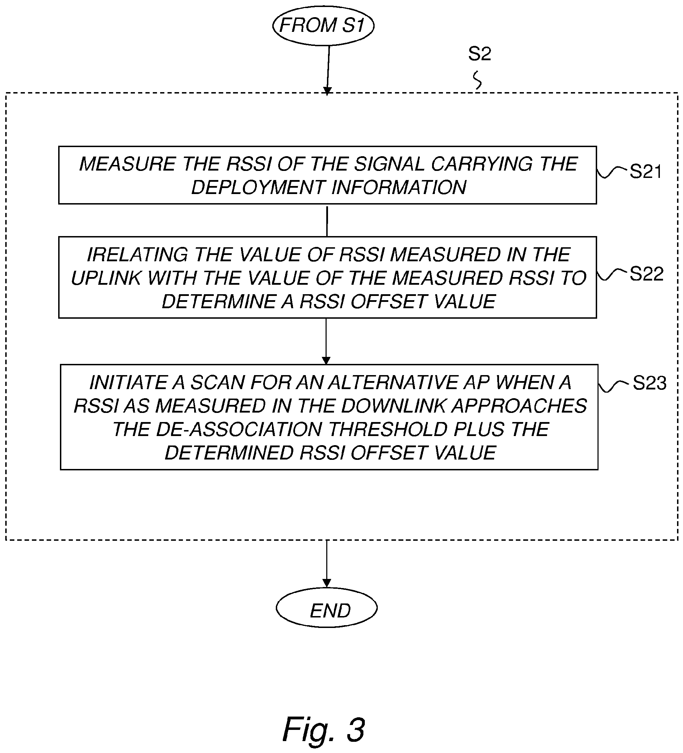

According to a specific embodiment of the proposed technology illustrated in FIG.3, there is provided a method wherein the deployment information comprises a tuple comprising an indication of RSSI as measured by the AP in the uplink and wherein the step S2 of deciding comprises the step of:

- measuring S21 the RSSI of the signal carrying the deployment information; and,
- relating S22 the value of RSSI as measured in the uplink with a value of the measured RSSI in the downlink to determine a RSSI offset value; and
- initiating S23 a scan for an alternative AP within the WLAN when a measured RSSI in the downlink approaches the value of the obtained de-association threshold plus the determined RSSI offset value.

A version of this particular embodiment of the proposed technology proposes that the wireless communication device scans more often if the signal strength of the beacon frame of the AP that is currently serving the wireless communication device is less than the value indicated in the tuple and less often if the signal strength of the beacon is higher. This, will enable the serving AP to control how often its associated wireless communication device may scan. This is advantageous since the scanning may be either passive, that is, the wireless communication device merely listens, or active. With active scanning, the wireless communication device sends probe frames that request different APs to identify themselves. If the wireless communication device scans too often there is a lot of overhead on the wireless medium that will reduce the available airtime for data communication. If the wireless communication device scans too seldom they may experience outages in case they transition from one AP to another AP. With the help of the tuple the AP can indicate values that are optimal. In a dense network it may be desirable to indicate high RSSI values in the tuple. So wireless communication devices are willing to switch more easily from one AP to another. In a scarce network or at the edge of a network the tuple may indicate lower RSSI values so that wireless communication device tend to stay longer with an AP. Thus, the information helps to provide topological information to wireless communication devices that they otherwise would not have.

To further illustrate the proposed embodiment a number of examples are provided. These examples are merely provided to facilitate the understanding of the proposed technology and should therefore not be construed as limiting.

The first example relates to the case where the deployment information comprises the roaming threshold within the WLAN. The roaming threshold (i.e., a signal level, X dBm) has been communicated to the STA by the WLAN AP. The STA is currently connected to AP1 and is experiencing a signal level well above the roaming threshold. However, the STA starts moving about the premises and the signal level starts degrading. The STA is observing the received signal level with every frame it exchanges with the AP. At Position B, the STA observes that the signal level it receives from AP1 is lower than the X dBm threshold, which triggers the STA to start discovery procedures for alternative APs. The STA performs active and/or passive scanning and finds AP2, which provides better signal level than AP1. The STA transitions to AP2.

The second example relates to the case where the deployment information comprises information about the minimum grade of service for which the WLAN has been designed and deployed. The grade of service for which the network has been designed, e.g. MCS Y, is provided to the STA by the WLAN AP it is currently connected to (AP1). The STA roams about the premises and at a certain point it observes its experienced grade of service is lower than the MCS Y. This triggers the STA to start a discovery procedure, which results in the STA discovering AP2. The STA associates to AP2 and the experienced grade of service is better or equal to the provided threshold MCS Y.

The third example relates to the case where the deployment information comprises information about the client density for which the WLAN has been designed. The client density, e.g. Z STAs/AP, for which the network has been designed for is communicated to the STA by AP1, to which the STA is currently associated. Over time, the number clients associated to AP1 grows beyond the Z STAs/AP number, so the STA initiates discovery procedures in order to find less populated APs. The STA finds AP2, which provides comparable service, but is less loaded. The STA associates to AP2.

The fourth example relates to the case where the deployment information comprises information whether the WLAN is controlled by an AP controller, AC. The STA is in this case informed that it is currently connected to a network where an AC is present. The STA assumes that this network provides guidance or steering information when it comes to inter-AP transitions, so it does not need to perform scanning procedures in order to discover APs which could provide better service. The STA is initially connected to AP1, but soon starts roaming around. The network (the AC or coordination between the APs) detects that the grade of service provided to the STA degrades, so AP1 sends a suggestion to the STA to move to AP2. The STA associates with AP2.

To still further illustrate the proposed embodiment the following example are provided. This example are merely provided to facilitate the understanding of the proposed technology and should therefore not be construed as limiting.

In this example certain aspects of the proposed technology will be highlighted, in particular aspects that are related to the signal thresholds at which the AP will consider de-association, as described above, it may also be beneficial to add an indication of the measured RSSI in uplink, as measured in the AP. This would act as a reference for the wireless communication device to consider, and would better handle the reciprocity aspects of signalling a threshold that is based on measurements by the AP.

> 1. At first the AP serving the wireless communication device measures RSSI on the uplink for the wireless communication device, in other words, the AP performs an uplink measurement of the RSSI. This measured value is denoted xul below

> 2. The AP then signals the threshold, denoted d, as part of the deployment information to the wireless communication device. The threshold d indicates the value at which the wireless communication device will be targeted for de-association. Also included in the deployment information is the measured RSSI value xul.

> 3. The wireless communication device can relate RSSI value xul as measured on the uplink to the RSSI value on the downlink, denoted xdl, when the signal in step 2 above was received from the AP and calculate an UL-DL offset:

$$offset = xul - xdl;$$

the wireless communication device could then target actions when the received RSSI measured (xdl) is approaching d + offset.

Prior to de-associating wireless communication devices from a serving AP, it may be beneficial to make sure that the wireless communication devices have found an alternative AP to connect to. Thus, one may consider the following signalling scheme to make sure that the wireless communication device are not de-associated if they don't have any optional AP.

• AP--> wireless communication device:
Message - De-association at d dBm, RSSI measurements will be performed on uplink to obtain xul, as explained above

This would provide the wireless communication device with information about its situation in the AP and also when it may be subject for de-association. Based on this information the wireless communication device may or may not start to scan/evaluate other AP's. It may however also wait until its own signal measurement from the AP xdl are approaching the level d+offset.

• AP--> the wireless communication device: De-association imminent

A warning is sent by the AP that de-association will come next. The wireless communication device may be able to respond to this message indicating that it has found another AP or BSS to associate with and that the de-association it is OK. It may alternatively indicate that no alternative AP is found.

• Wireless communication device -->AP: OK! or No better alternative found

This last sequence may prevent disconnecting wireless communication devices that don't have any other option to associate to another AP. This would also take into consideration that there may be, e.g., admission control of certain types of traffic such that, irrespective of RSSI, the wireless communication device is not allowed to associate to another AP and have no other alternative but to stay on the current. It may of course still be up to the AP to either let the wireless communication device remain in the BSS/AP or anyway de-associate.

The proposed technology also provides an optional embodiment of the proposed method wherein the de-association threshold is set based on information about the deployment information. One option is to base the thresholds on knowledge of the deployment. In some situations however, other aspects may also be considered, such as load in the different Basic Service Sets, BSS's, success ratio of transmissions to a certain wireless communication device etc. These aspects may be advantageous if the network deployment information to be reflected is sent dedicated to a wireless communication device and not part of a broadcast message.

Having described various embodiments and examples of the proposed methods in what follows it will be described a number of embodiments of devices configured to perform the proposed methods.

To this end the proposed technology provides an Access Point, AP, 100, 200, 300, 400in a Wireless Local Area Network, WLAN, comprising a plurality of APs, wherein the AP is configured to provide a wireless communication devices 1000, 2000, 3000, 4000 served by the AP 100, 200, 300, 400 with deployment information relevant to the WLAN to enable the wireless communication device 1000, 2000, 3000, 4000 to decide, based at least partially on the deployment information, whether to initiate a scan for a different AP in the WLAN to connect to.

According to a possible embodiment of the proposed technology there is provided an AP 100, 200, 300, 400, wherein the deployment information comprises the roaming threshold within the WLAN.

According to another possible embodiment of the proposed technology there is provided an AP 100, 200, 300, 400, wherein the deployment information comprises the minimum grade of service for which the WLAN has been designed and deployed.

According to a particular embodiment of the proposed technology there is provided an AP 100, 200, 300, 400 wherein the minimum grade of service relates to Modulation and Coding Scheme, MCS, or transmission rate.

According to an optional embodiment of the proposed technology there is provided an AP 100, 200, 300, 400, wherein the deployment information comprises the client density for which the WLAN has been designed.

A particular embodiment provides an AP 100, 200, 300, 400, wherein the client density comprises the maximum density or the average client density.

An alternative embodiment of the proposed technology provides an AP 100, 200, 300, 400, wherein the deployment information comprises information whether the WLAN is controlled by an AP controller, AC.

By way of example, the proposed technology provides an embodiment of an AP 100, 200, 300, 400, where the AP 100, 200, 300, 400 is configured to provide the deployment information to the wireless communication device by broadcast signaling.

A particular embodiment of the proposed technology provides an AP 100, 200, 300, 400 that is configured to provide the deployment information by broadcast signaling using a beacon frame or a FILS discovery frame.

According to an alternative embodiment there is provide an AP 100, 200, 300, 400 that is configured provide the deployment information to the wireless communication device in the form of unicast signaling.

A particular version of this embodiment provides an AP 100, 200, 300, 400 that is configured to provide the deployment information by unicast signaling using any of the following signaling formats: a probe response, an association response, a re-association response frame or an action frame.

Another possible embodiment of the proposed technology provides an AP 100, 200, 300, 400 that is configured to provide the deployment information to the wireless communication device in the form of an information element included in at least one of the frames.

According to an optional embodiment there is provided an AP 100, 200, 300, 400 that is configured to provide the deployment information to the wireless communication device 1000, 2000, 3000, 4000, in the form of a vendor specific information element.

A particular embodiment of the proposed technology provides an AP 100, 200, 300, 400, wherein the deployment information comprises a list of tuples, the tuples comprising a received signal strength indicator, RSSI, threshold and a background scanning interval to enable the wireless communication device to scan the background scanning interval in order to discover at least one alternative AP in the WLAN to request a connection to.

According to an exemplary embodiment there is provided an AP 100, 200, 300, 400, wherein the deployment information comprises an indication of RSSI as measured by the AP 100, 200, 300, 400 in the uplink.

Yet another exemplary embodiment of the proposed technology provides an AP 100, 200, 300, 400 wherein the deployment information provided to the wireless communication device also comprises a de-association threshold indicating at which RSSI value the wireless communication device will be de-associated from the AP 100, 200, 300, 400.

According to an optional embodiment there is provided an AP 100, 200, 300, 400, wherein the de-association threshold provided to the wireless device is set based on information about the deployment information.

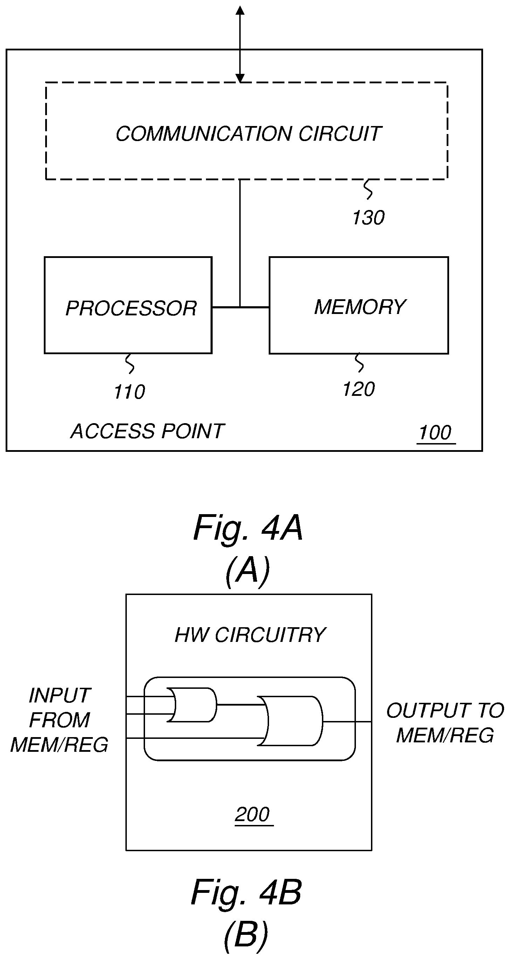

FIG. 4A is a schematic block diagram illustrating an example of an AP 100, based on a processor-memory implementation according to an embodiment. In this particular example, the arrangement/system 100 comprises a processor 110 and a memory 120, the memory 120 comprising instructions executable by the processor 110, whereby the processor is operative to enable said AP 100 to provide deployment information to the wireless communication device 1000; 2000; 3000; 4000 to enable the wireless communication device 1000; 2000; 3000; 4000 to decide whether to initiate a scan for a different AP in the WLAN to connect to.

The AP 100 may also include a communication circuit 130. The communication circuit 130 may include functions for wired and/or wireless communication with other devices and/or network nodes in the network. In a particular example, the communication circuit 130 may be based on radio circuitry for communication with one or more other nodes, including transmitting and/or receiving information. The communication circuit 130 may be interconnected to the processor 110 and/or memory 120. By way of example, the communication circuit 130 may include any of the following: a receiver, a transmitter, a transceiver, input/output (I/O) circuitry, input port(s) and/or output port(s).

FIG. 4B is a schematic block diagram illustrating another example of an AP 200, based on a hardware circuitry implementation according to an embodiment. Particular examples of suitable hardware circuitry include one or more suitably configured or possibly reconfigurable electronic circuitry, e.g. Application Specific Integrated Circuits (ASICs), Field Programmable Gate Arrays (FPGAs), or any other hardware logic such as circuits based on discrete logic gates and/or flip-flops interconnected to perform specialized functions in connection with suitable registers (REG), and/or memory units (MEM).

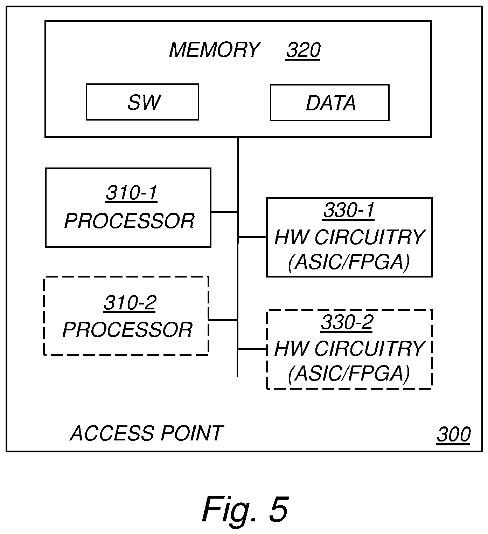

FIG. 5 is a schematic block diagram illustrating yet another example of an AP 300, based on combination of both processor(s) 310-1, 310-2 and hardware circuitry 330-1, 330-2 in connection with suitable memory unit(s) 320. The arrangement 300 comprises one or more processors 310-1, 310-2, memory 320 including storage for software and data, and one or more units of hardware circuitry 330-1, 330-2 such as ASICs and/or FPGAs. The overall functionality is thus partitioned between programmed software, SW, for execution on one or more processors 310-1, 310-2, and one or more pre-configured or possibly reconfigurable hardware circuits 330-1, 330-2 such as ASICs and/or FPGAs. The actual hardware-software partitioning can be decided by a system designer based on a number of factors including processing speed, cost of implementation and other requirements.

The proposed technology also provides for a wireless communication device configured to perform the earlier described method.

To this end the proposed technology provides a wireless communication device 1000, 2000, 3000, 4000, served by an Access Point, AP, 100, 200, 300, 400 in a Wireless Local Area Network, WLAN, comprising a plurality of APs. The wireless communication device 1000, 2000, 3000, 4000 is configured to obtain deployment information relevant to the WLAN. The wireless communication device 1000, 2000, 3000, 4000 is also configured to decide, based on the obtained deployment information, whether to initiate a scan for a different AP within the WLAN to connect to.

An embodiment of the proposed technology provides a wireless communication device 1000, 2000, 3000, 4000, wherein the obtained deployment information comprises information relating to any of the following: the roaming threshold within the WLAN, the minimum grade of service for which the WLAN has been designed and deployed, the client density for which the WLAN has been designed and information relating whether the WLAN is controlled by an AP controller, AC.

Another embodiment of the proposed technology provides a wireless communication device 1000, 2000, 3000, 4000, wherein the deployment information is obtained from broadcast signaling from the serving AP 100, 200, 300, 400.

Yet another embodiment of the proposed technology provides a wireless communication device 1000, 2000, 3000, 4000 wherein the deployment information is obtained from broadcast signaling using a beacon frame or a FILS discovery frame.

By way of example, the proposed technology provides a wireless communication device 1000, 2000, 3000, 4000, wherein the deployment information is obtained from unicast signaling from the serving AP 100, 200, 300, 400.

Still another embodiment of the proposed technology provides a wireless communication device 1000, 2000, 3000, 4000, wherein the deployment information is obtained from unicast signaling performed by using any of the following signaling formats: a probe response, an association response, a re-association response frame or an action frame.

According to an alternative embodiment of the proposed technology there is provided a wireless communication device 1000, 2000, 3000, 4000, wherein the deployment information is obtained from a vendor specific information element comprised in a message transmitted from the serving AP 100, 200, 300, 400.

A particular embodiment of the proposed technology provides a wireless communication device 1000, 2000, 3000, 4000, wherein the obtained deployment information also comprises a list of tuples, the tuples comprising a received signal strength indicator, RSSI, threshold and a background scanning interval. The wireless communication device is configured to decide, based on the RSSI threshold, whether to scan the background scanning interval for an alternative AP in the WLAN to request a connection to.

An optional embodiment of the proposed technology provides a wireless communication device 1000, 2000, 3000, 4000, wherein the deployment information provided to the wireless communication device also comprises a de-association threshold indicating at which RSSI value the wireless communication device will be de-associated from the AP 100, 200, 300, 400.

A particular embodiment of the proposed technology provides a wireless communication device 1000, 2000, 3000, 4000, wherein the deployment information comprises a tuple comprising an indication of RSSI as measured by the AP 1000, 2000, 3000, 4000 in the uplink and wherein the wireless communication device is configured to measure the RSSI of the signal carrying the deployment information. The wireless communication device 1000, 2000, 3000, 4000 is also configured to relate the value of RSSI as measured in the uplink with a value of the measured RSSI in the downlink to determine a RSSI offset value. The wireless communication device is also configured to initiate a scan for an alternative AP within the WLAN when a measured RSSI in the downlink approaches the value of the obtained de-association threshold plus the determined RSSI offset value.

Another optional embodiment of the proposed technology provides a wireless communication device 1000, 2000, 3000, 4000, wherein the de-association threshold is set based on information about the deployment information.

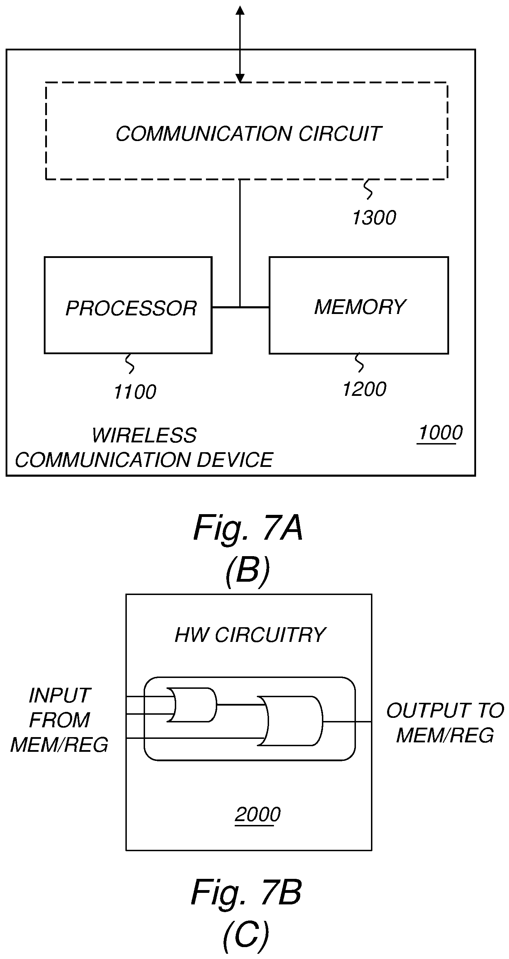

FIG. 7A is a schematic block diagram illustrating an example of a wireless communication device 1000, based on a processor-memory implementation according to an embodiment. In this particular example, wireless communication device 1000 comprises a processor 1100 and a memory 1200, the memory 1200 comprising instructions executable by the processor 1100, whereby the processor is operative to decide, based on obtained deployment information, whether to initiate a scan for a different AP within the WLAN to connect to.

The wireless communication device 1000 may also include a communication circuit 1300. The communication circuit 1300 may include functions for wired and/or wireless communication with other devices and/or network nodes in the network. In a particular example, the communication circuit 1300 may be based on radio circuitry for communication with one or more other nodes, including transmitting and/or receiving information. The communication circuit 1300 may be interconnected to the processor 1100 and/or memory 1200. By way of example, the communication circuit 1300 may include any of the following: a receiver, a transmitter, a transceiver, input/output (I/O) circuitry, input port(s) and/or output port(s).

FIG. 7B is a schematic block diagram illustrating another example of a wireless communication device 2000, based on a hardware circuitry implementation according to an embodiment. Particular examples of suitable hardware circuitry include one or more suitably configured or possibly reconfigurable electronic circuitry, e.g. Application Specific Integrated Circuits (ASICs), Field Programmable Gate Arrays (FPGAs), or any other hardware logic such as circuits based on discrete logic gates and/or flip-flops interconnected to perform specialized functions in connection with suitable registers (REG), and/or memory units (MEM).

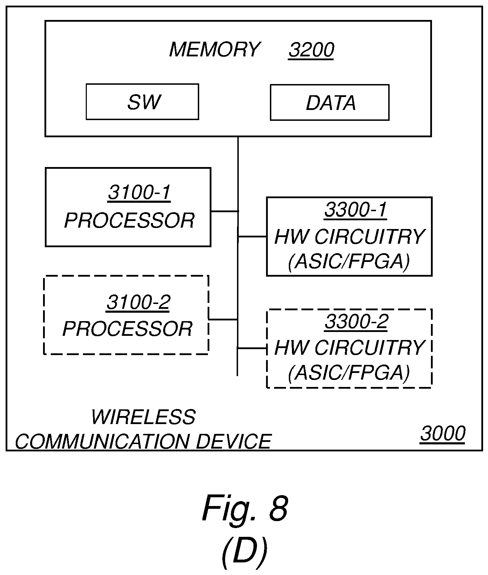

FIG. 8 is a schematic block diagram illustrating yet another example of a wireless communication device 3000, based on combination of both processor(s) 3100-1, 3100-2 and hardware circuitry 3300-1, 3300-2 in connection with suitable memory unit(s) 3200. The wireless communication device 3000 comprises one or more processors 3100-1, 3100-2, memory 3200 including storage for software and data, and one or more units of hardware circuitry 3300-1, 3300-2 such as ASICs and/or FPGAs. The overall functionality is thus partitioned between programmed software, SW, for execution on one or more processors 3100-1, 3100-2, and one or more pre-configured or possibly reconfigurable hardware circuits 3300-1, 3300-2 such as ASICs and/or FPGAs. The actual hardware-software partitioning can be decided by a system designer based on a number of factors including processing speed, cost of implementation and other requirements.

As used herein, the non-limiting terms "wireless communication device" and "STA", and "client" may refer to a mobile phone, a cellular phone, a Personal Digital Assistant (PDA), equipped with radio communication capabilities, a smart phone, a laptop or Personal Computer (PC), equipped with an internal or external mobile broadband modem, a tablet with radio communication capabilities, a target device, a device to device UE, a machine type UE or UE capable of machine to machine communication, Customer Premises Equipment (CPE), Laptop Embedded Equipment (LEE), Laptop Mounted Equipment (LME), USB dongle, a portable electronic radio communication device, a sensor device equipped with radio communication capabilities or the like. In particular, the term "wireless communication device" should be interpreted as non-limiting terms comprising any type of wireless device communicating with a network node in a wireless communication system and/or possibly communicating directly with another wireless communication device. In other words, a wireless communication device may be any device equipped with circuitry for wireless communication according to any relevant standard for communication.

As used herein, an AP can equivalently be referred to as a network node. The non-limiting term "network node" may in turn refer to base stations, network control nodes such as network controllers, radio network controllers, base station controllers, access controllers, and the like. In particular, the term "base station" may encompass different types of radio base stations including standardized base station functions such as NodeBs, or evolved NodeBs (eNBs), and also macro/micro/pico radio base stations, home base stations, also known as femto base stations, relay nodes, repeaters, radio access points, Base Transceiver Stations (BTSs), and even radio control nodes controlling one or more Remote Radio Units (RRUs), or the like.

It will be appreciated that the methods and arrangements described herein can be implemented, combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Alternatively, or as a complement, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

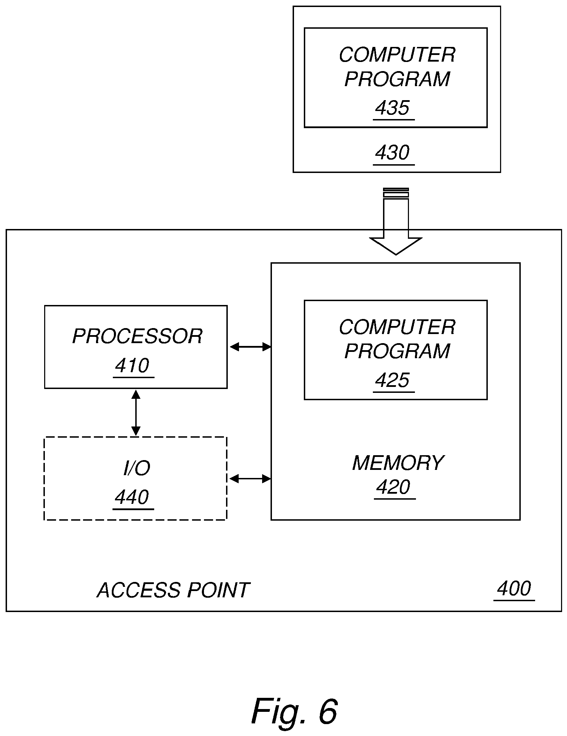

FIG. 6 is a schematic diagram illustrating an example of a computer-implementation in an Access Point 400 according to an embodiment. In this particular example, at least some of the steps, functions, procedures, modules and/or blocks described herein are implemented in a computer program 425; 435, which is loaded into the memory 420 for execution by processing circuitry including one or more processors 410. The processor(s) 410 and memory 420 are interconnected to each other to enable normal software execution. An optional input/output device 440 may also be interconnected to the processor(s) 410 and/or the memory 420 to enable input and/or output of relevant data such as input parameter(s) and/or resulting output parameter(s).

In a particular embodiment of the proposed technology, the computer program 425; 435 comprises instructions, which when executed by at least one processor 410, cause the processor(s) 410 to:

- collect deployment information relevant to a Wireless Local Area Network, WLAN;

- prepare a message to be transmitted to a wireless communication device 1000; 2000; 3000; 4000 served by an Access Point, AP, 1000; 200; 300; 400, the message comprising the collected deployment information, to enable a wireless communication device 1000; 2000; 3000; 4000 to decide, based at least partially on the deployment information, whether to initiate a scan for a different AP in the WLAN to connect to.

The term 'processor' should be interpreted in a general sense as any system or device capable of executing program code or computer program instructions to perform a particular processing, determining or computing task.

The processing circuitry including one or more processors 410 is thus configured to perform, when executing the computer program 425; 435, well-defined processing tasks such as those described herein.

The processing circuitry does not have to be dedicated to only execute the above-described steps, functions, procedure and/or blocks, but may also execute other tasks.

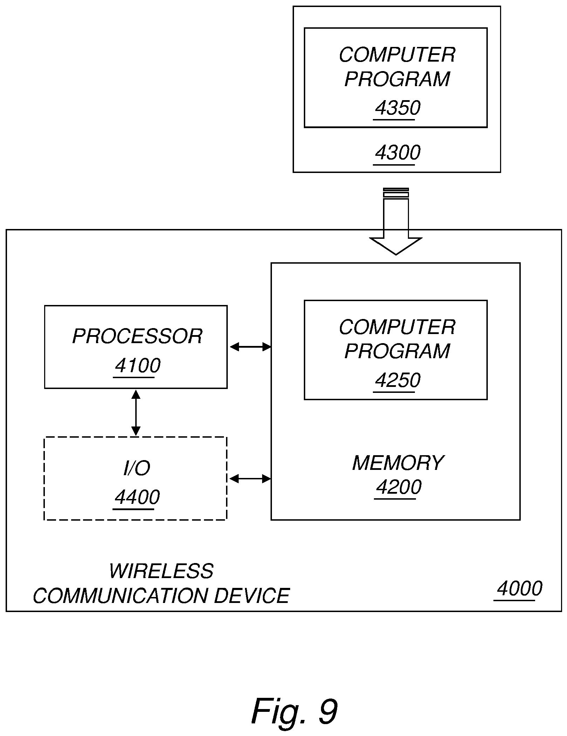

FIG. 9 is a schematic diagram illustrating an example of a computer-implementation in a wireless communication device 4000 according to an embodiment. In this particular example, at least some of the steps, functions, procedures, modules and/or blocks described herein are implemented in a computer program 4250; 4350, which is loaded into the memory 4200 for execution by processing circuitry including one or more processors 4100. The processor(s) 4100 and memory 4200 are interconnected to each other to enable normal software execution. An optional input/output device 4400 may also be interconnected to the processor(s) 4100 and/or the memory 4200 to enable input and/or output of relevant data such as input parameter(s) and/or resulting output parameter(s).

In a particular embodiment of the proposed technology, the computer program 4250; 4350 comprises instructions, which when executed by at least one processor 4100, cause the processor(s) 4100 to:

- read deployment information relevant to a Wireless Local Area Network, WLAN, the deployment information being obtained from a serving Access Point, AP; and

- decide, based on the read deployment information, whether to initiate a scan for a different AP within the WLAN to connect to.

The proposed technology also provides a carrier comprising the computer program, 425; 425; 4250; 4350 wherein the carrier is one of an electronic signal, an optical signal, an electromagnetic signal, a magnetic signal, an electric signal, a radio signal, a microwave signal, or a computer-readable storage medium.

By way of example, the software or computer program 425; 435; 4250; 4350 may be realized as a computer program product, which is normally carried or stored on a computer-readable medium 420; 430; 4200; 4300 in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

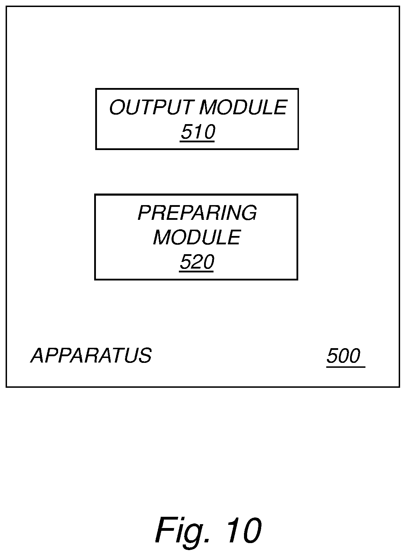

FIG. 10 is a schematic diagram illustrating an example of an apparatus 500 for controlling operation(s) in an Access Point 100; 200; 300; 400 in a Wireless Local Area Network, WLAN. The apparatus 500 comprises an output module 510 for outputting deployment information relevant to a Wireless Local Area Network, WLAN. The apparatus also comprises a preparing module 520 for preparing a transmission to a wireless communication device 1000; 2000; 3000; 4000 served by an Access Point, AP, 100; 200; 300; 400, the transmission comprising the outputted deployment information, to enable a wireless communication device 1000; 2000; 3000; 4000 to decide, based at least partially on the deployment information, whether to initiate a scan for a different AP in the WLAN to connect to.

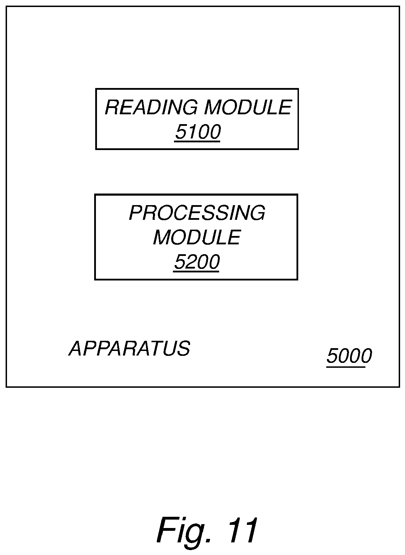

FIG. 11 is a schematic diagram illustrating an example of an apparatus 5000 controlling operation(s) in a wireless communication device 1000; 2000; 3000; 4000. The apparatus 5000 comprises a reading module 5100 for reading deployment information relevant to a Wireless Local Area Network, WLAN. The apparatus also comprises a processing module 5200 for deciding, based on the read deployment information, whether the wireless communication device 1000; 2000; 3000; 4000 should initiate a scan for an AP within the WLAN to connect to.

Alternatively it is possible to realize the module(s) in FIG. 10 and FIG.11 predominantly by hardware modules, or alternatively by hardware, with suitable interconnections between relevant modules. Particular examples include one or more suitably configured digital signal processors and other known electronic circuits, e.g. discrete logic gates interconnected to perform a specialized function, and/or Application Specific Integrated Circuits (ASICs) as previously mentioned. Other examples of usable hardware include input/output (I/O) circuitry and/or circuitry for receiving and/or sending signals. The extent of software versus hardware is purely implementation selection.

The embodiments described above are merely given as examples, and it should be understood that the proposed technology is not limited thereto. It will be understood by those skilled in the art that various modifications, combinations and changes may be made to the embodiments without departing from the present scope as defined by the appended claims.

**Abbreviations used**

AP      Access Point
STA     Station
RSSI    Received Signal Strength Indicator
MCS     Modulation and Coding Scheme
FILS    Fast Initial Link Setup
AC      AP Controller
O&M     Operations and Maintenance

**Claims**

1. A method performed by an Access Point, AP, (100; 200; 300; 400) in a Wireless Local Area Network, WLAN, comprising a plurality of APs the method comprises the step of providing a wireless communication device (1000; 2000; 3000; 4000) served by said AP (100; 200; 300; 400) with deployment information comprising the minimum grade of service for which the WLAN has been designed and deployed to enable said wireless communication device (1000; 2000; 3000; 4000) to decide, based at least on the deployment information, whether to initiate a scan for a different AP in the WLAN to connect to, when the wireless device experiences a grade of service being lower than indicated in the deployment information.

2. The method of claim 1, wherein said minimum grade of service relates to Modulation and Coding Scheme, MCS, or transmission rate.

3. A method performed by a wireless communication device (1000, 2000, 3000, 4000), served by an Access Point, AP, (100; 200; 300; 400) in a Wireless Local Area Network, WLAN, comprising a plurality of APs wherein the method comprises the steps of:

    - obtaining (S1) deployment information relevant to the WLAN from said access point, the deployment information comprising the minimum grade of service for which the WLAN has been designed and deployed;
    - deciding (S2), based on the obtained deployment information, whether to initiate a scan for a different AP within the WLAN to connect to, when the wireless communication device experiences a grade of service being lower than indicated in the deployment information.

4. The method of claim 3, wherein said minimum grade of service relates to Modulation and Coding Scheme, MCS, or transmission rate

5. The method according to claim 3 or 4, wherein the obtained deployment information further comprises information relating to any of the following: the client density for which the WLAN has been designed and information relating whether the WLAN is controlled by an AP controller, AC.

6. The method according to any of the claims 3 to 5, wherein the deployment information is obtained from broadcast signaling from the serving AP (100, 200, 300, 400) using a beacon frame or a Fast Initial Link Setup, FILS, discovery frame..

7. The method according to any of the claims 3 to 5, wherein the deployment information is obtained from unicast signaling from the serving AP (100, 200, 300, 400).

8. The method according to claim 7, wherein the deployment information is obtained from unicast signaling performed by using any of the following signaling formats: a probe response, an association response, a re-association response frame or an action frame.

9. The method according to any of the claims 3 to 5, wherein said deployment information is obtained from a vendor specific information element comprised in a message transmitted from the serving AP (100, 200, 300, 400).

10. The method according to any of the claims 3-9, wherein the obtained deployment information also comprises a list of tuples, said tuples comprising a received signal strength indicator, RSSI, threshold and a background scanning interval and wherein the method comprises the step (S2) of deciding, based on the RSSI threshold, whether to scan said background scanning interval for an alternative AP in the WLAN to request a connection to.

11. The method according to claim 10, wherein the deployment information provided to the wireless communication device also comprises a de-association threshold indicating at which RSSI value the wireless communication device will be de-associated from the AP (100; 200; 300; 400).

12. The method according to claim 11, wherein the deployment information comprises a tuple comprising an indication of RSSI as measured by the AP (100; 200; 300; 400) in the uplink and wherein the step (S2) of deciding comprises the step of:

- measuring (S21) the RSSI of the signal carrying the deployment information; and,
- relating (S22) the value of RSSI as measured in the uplink with a value of the measured RSSI in the downlink to determine a RSSI offset value;

and
- initiating (S23) a scan for an alternative AP within the WLAN when a measured RSSI in the downlink approaches the value of the obtained de-association threshold plus the determined RSSI offset value.

13. The method according to any of the claims 11 or 12, wherein said de-association threshold is set based on information about the deployment information.

14. An Access Point, AP, (100; 200; 300; 400) in a Wireless Local Area Network, WLAN, comprising a plurality of APs, wherein the AP (100, 200, 300, 400) is configured to provide a wireless communication device (1000; 2000; 3000; 4000) served by said AP (100; 200; 300; 400) with deployment information comprising the minimum grade of service for which the WLAN has been designed and deployed to enable said wireless communication device (1000; 2000; 3000; 4000) to decide, based at least on the deployment information, whether to initiate a scan for a different AP in the WLAN to connect to, when the wireless device experiences a grade of service being lower than indicated in the deployment information.

15. A wireless communication device (1000; 2000; 3000; 4000) served by an Access Point, AP, (100; 200; 300; 400) in a Wireless Local Area Network, WLAN, comprising a plurality of APs wherein,

- the wireless communication device (1000; 2000; 3000; 4000) is configured to obtain deployment information relevant to the WLAN from said access point, the deployment information comprising the minimum grade of service for which the WLAN has been designed and deployed; and
- the wireless communication device (1000; 2000; 3000; 4000) is configured to decide, based on the obtained deployment information, whether to initiate a scan for a different AP within the WLAN to connect to, when the wireless device experiences a grade of service being lower than indicated in the deployment information.

**Patentansprüche**

1. Verfahren, durchgeführt von einem Zugangspunkt, AP, (100; 200; 300; 400) in einem drahtlosen lokalen Netzwerk, WLAN, das eine Vielzahl von AP umfasst, wobei das Verfahren den Schritt des Bereitstellens eines drahtlosen Kommunikationsgeräts (1000; 2000; 3000; 4000) umfasst, das von dem AP (100; 200; 300; 400) mit Bereitstellungsinformationen bedient wird, die die Mindestdienstqualität umfassen, für die das WLAN ausgelegt und bereitgestellt wurde, um das drahtlose Kommunikationsgerät (1000; 2000; 3000; 4000) zu befähigen, um auf der Grundlage von mindestens den Bereitstellungsinformationen zu entscheiden, ob ein Scan nach einem anderen AP im WLAN zu initiieren ist, um damit zu verbinden, wenn das drahtlose Gerät eine Dienstqualität erfährt, die geringer ist als sie in den Bereitstellungsinformationen angegeben ist.

2. Verfahren nach Anspruch 1, wobei sich die Mindestdienstqualität auf Modulations- und Kodierungsschema, MCS, oder Übertragungsgeschwindigkeit bezieht.

3. Verfahren, durchgeführt von einem drahtlosen Kommunikationsgerät (1000, 2000, 3000, 4000), das von einem Zugangspunkt, AP, (100; 200; 300; 400) in einem drahtlosen lokalen Netzwerk, WLAN, bedient wird, das eine Vielzahl von AP umfasst, wobei das Verfahren die Schritte umfasst:

   - Erhalten (S1) von für das WLAN relevanten Bereitstellungsinformationen von dem Zugangspunkt, wobei die Bereitstellungsinformationen die Mindestdienstqualität umfassen, für die das WLAN ausgelegt und bereitgestellt wurde;
   - Entscheiden (S2) auf der Grundlage der erhaltenen Bereitstellungsinformationen, ob ein Scan nach einem anderen AP innerhalb des WLAN zu initiieren ist, um damit zu verbinden, wenn die drahtlose Vorrichtung eine Dienstqualität erfährt, die geringer ist als sie in den Bereitstellungsinformationen angegeben ist.

4. Verfahren nach Anspruch 3, wobei sich die Mindestdienstqualität auf Modulations- und Kodierungsschema, MCS, oder Übertragungsgeschwindigkeit bezieht.

5. Verfahren nach Anspruch 3 oder 4, wobei die erhaltenen Bereitstellungsinformationen weiter Informationen in Bezug auf eines der Folgenden umfassen: die Client-Dichte, für die das WLAN ausgelegt wurde, und Informationen in Bezug darauf, ob das WLAN von einem AP-Steuerer, AC, gesteuert wird.

6. Verfahren nach einem der Ansprüche 3 bis 5, wobei die Bereitstellungsinformationen aus von dem bedienenden AP (100, 200, 300, 400) ausgestrahlter Signalisierung unter Verwendung eines Bakenrahmens oder eines Entdeckungsrahmen mit schnellem anfänglichen Verbindungsaufbau, FILS, erhalten werden..

7. Verfahren nach einem der Ansprüche 3 bis 5, wobei die Bereitstellungsinformationen aus Unicast-Signalisierung von dem bedienenden AP (100, 200, 300, 400) erhalten werden.

8. Verfahren nach Anspruch 7, wobei die Bereitstellungsinformationen aus Unicast-Signalisierung erhalten werden, die unter Verwendung der folgenden Signalisierungsformate durchgeführt wird: einer Prüfantwort, einer Verbindungsantwort, eines Neuverbindungsantwortrahmens oder eines Handlungsrahmens.

9. Verfahren nach einem der Ansprüche 3 bis 5, wobei die Bereitstellungsinformationen aus einem herstellerspezifischen Informationselement erhalten werden, das aus einer vom bedienenden AP (100, 200, 300, 400) übertragenen Nachricht besteht.

10. Verfahren nach einem der Ansprüche 3-9, wobei die erhaltenen Bereitstellungsinformationen außerdem eine Liste von Tupeln umfassen, wobei die Tupel einen Schwellwert für den Indikator der empfangenen Signalstärke, RSSI, und ein Intervall für Hintergrundscannen umfassen, und wobei das Verfahren den Schritt (S2) des Entscheidens auf der Grundlage des RSSI-Schwellwerts umfasst, ob das Intervall für Hintergrundscannen nach einem alternativen AP im WLAN gescannt werden soll, um eine Verbindung dazu anzufragen.

11. Verfahren nach Anspruch 10, wobei die für das drahtlose Kommunikationsgerät verfügbar gemachten Bereitstellungsinformationen außerdem einen Schwellwert für die Aufhebung der Zuordnung umfassen, der angibt, bei welchem RSSI-Wert für das drahtlose Kommunikationsgerät die Zuordnung zum AP (100; 200; 300; 400) aufgehoben werden soll.

12. Verfahren nach Anspruch 11, wobei die Bereitstellungsinformationen ein Tupel umfassen, das eine Angabe des RSSI umfasst, wie er vom AP (100; 200; 300; 400) in der Aufwärtsverbindung gemessen wurde, und wobei der Schritt (S2) des Entscheidens den Schritt umfasst:

   - Messen (S21) des RSSI des Signals, das die Bereitstellungsinformationen trägt; und,
   - Beziehen (S22) des Werts des RSSI, wie er in der Aufwärtsverbindung gemessen wurden, auf einen Wert des in der Abwärtsverbindung gemessenen RSSI, um einen Versatzwerk des RSSI zu bestimmen; und
   - Initiieren (S23) eines Scans nach einem alternativen AP innerhalb des WLAN, wenn sich ein in der Abwärtsverbindung gemessener RSSI dem Wert des erhaltenden Schwellwert für die Aufhebung der Zuordnung plus des bestimmten Versatzwerts des RSSI annähert.

**13.** Verfahren nach einem der Ansprüche 11 oder 12, wobei der Schwellwert für die Aufhebung der Zuordnung auf der Grundlage von Informationen über die Bereitstellungsinformationen festgelegt wird.

**14.** Zugangspunkt, AP, (100; 200; 300; 400) in einem drahtlosen lokalen Netzwerk, WLAN, das eine Vielzahl von AP umfasst, wobei der AP (100, 200, 300, 400) konfiguriert ist, um einem drahtlose Kommunikationsgerät (1000; 2000; 3000; 4000), das von dem AP (100; 200; 300; 400) bedient wird, Bereitstellungsinformationen zur Verfügung zu stellen, die die Mindestdienstqualität, für die das WLAN ausgelegt und bereitgestellt wurde, umfassen, um das drahtlose Kommunikationsgerät (1000; 2000; 3000; 4000) zu befähigen, um auf der Grundlage von mindestens den Bereitstellungsinformationen zu entscheiden, ob ein Scan nach einem anderen AP im WLAN zu initiieren ist, um damit zu verbinden, wenn das drahtlose Gerät eine Dienstqualität erfährt, die geringer ist als sie in den Bereitstellungsinformationen angegeben ist.

**15.** Drahtloses Kommunikationsgerät (1000; 2000; 3000; 4000), das von einem Zugangspunkt, AP, (100; 200; 300; 400) in einem drahtlosen lokalen Netzwerk, WLAN, bedient wird, das eine Vielzahl von AP umfasst, wobei,

- das drahtlose Kommunikationsgerät (1000; 2000; 3000; 4000) konfiguriert ist, um für das WLAN relevante Bereitstellungsinformationen von dem Zugangspunkt zu erhalten, wobei die Bereitstellungsinformationen die Mindestdienstqualität, für die das WLAN ausgelegt und bereitgestellt wurde, umfassen; und
- das drahtlose Kommunikationsgerät (1000; 2000; 3000; 4000) konfiguriert ist, um auf der Grundlage der erhaltenen Bereitstellungsinformationen zu entscheiden, ob ein Scan nach einem anderen AP innerhalb des WLAN zu initiieren ist, um damit zu verbinden, wenn das drahtlose Gerät eine Dienstqualität erfährt, die geringer ist als sie in den Bereitstellungsinformationen angegeben ist.

**Revendications**

**1.** Procédé effectué par un point d'accès, AP, (100 ; 200 ; 300 ; 400) dans un réseau local sans fil, WLAN, comprenant une pluralité d'AP, le procédé comprend l'étape de fourniture à un dispositif de communication sans fil (1000 ; 2000 ; 3000 ; 4000) desservi par ledit AP, (100 ; 200 ; 300 ; 400) d'informations de déploiement comprenant la qualité de service minimale pour laquelle le WLAN a été conçu et déployé pour permettre audit dispositif de communication sans fil (1000 ; 2000 ; 3000 ; 4000) de décider, sur la base au moins des informations de déploiement, si lancer un balayage pour un AP différent dans le WLAN pour se connecter, quand le dispositif sans fil rencontre une qualité de service qui est inférieure à celle indiquée dans les informations de déploiement.

**2.** Procédé selon la revendication 1, dans lequel ladite qualité de service minimale concerne un schéma de modulation et de codage, MCS, ou un débit de transmission.

**3.** Procédé effectué par un dispositif de communication sans fil (1000 ; 2000 ; 3000 ; 4000) desservi par un point d'accès, AP, (100 ; 200 ; 300 ; 400) dans un réseau local sans fil, WLAN, comprenant une pluralité d'AP, dans lequel le procédé comprend les étapes suivantes :

- l'obtention (S1) d'informations de déploiement concernant le WLAN à partir dudit point d'accès, les informations de déploiement comprenant la qualité de service minimale pour laquelle le WLAN a été conçu et déployé ;
- le fait de décider (S2), sur la base des informations de déploiement obtenues, si lancer un balayage pour un AP différent dans le WLAN pour se connecter, quand le dispositif de communication sans fil rencontre une qualité de service qui est inférieure à celle indiquée dans les informations de déploiement.

**4.** Procédé selon la revendication 3, dans lequel ladite qualité de service minimale concerne un schéma de modulation et de codage, MCS, ou un débit de transmission.

**5.** Procédé selon la revendication 3 ou 4, dans lequel les informations de déploiement obtenues comprennent en outre des informations concernant l'une quelconque parmi ce qui suit : la densité de client pour laquelle le WLAN a été conçu et des informations concernant le fait que le WLAN est commandé par un dispositif de commande d'AP, AC.

**6.** Procédé selon l'une quelconque des revendications 3 à 5, dans lequel les informations de déploiement sont obtenues à partir d'une signalisation de radiodiffusion provenant de l'AP de desserte (100, 200, 300, 400) en utilisant une trame de balise ou une trame de découverte de configuration de liaison initiale rapide, FILS..

**7.** Procédé selon l'une quelconque des revendications 3 à 5, dans lequel les informations de déploiement sont obtenues à partir d'une signalisation de monodiffusion provenant de l'AP de desserte (100, 200, 300, 400).

**8.** Procédé selon la revendication 7, dans lequel les informations de déploiement sont obtenues à partir d'une signalisation de monodiffusion effectuée en utilisant l'un quelconque des formats de signalisation suivants : une réponse de sonde, une réponse d'association, une trame de réponse de réassociation ou une trame d'action.

**9.** Procédé selon l'une quelconque des revendications 3 à 5, dans lequel lesdites informations de déploiement sont obtenues à partir d'un élément d'information spécifique au vendeur compris dans un message transmis à partir de l'AP de desserte (100, 200, 300, 400).

**10.** Procédé selon l'une quelconque des revendications 3 à 9, dans lequel les informations de déploiement obtenues comprennent également une liste de tuples, lesdits tuples comprenant un seuil d'indicateur d'intensité du signal reçu, RSSI, et un intervalle de balayage d'arrière-plan et dans lequel le procédé comprend l'étape (S2) consistant à décider, sur la base du seuil de RSSI, si balayer ledit intervalle de balayage d'arrière-plan pour un AP alternatif dans le WLAN pour demander une connexion à celui-ci.

**11.** Procédé selon la revendication 10, dans lequel les informations de déploiement fournies au dispositif de communication sans fil comprennent également un seuil de dé-association indiquant à quelle valeur de RSSI le dispositif de communication sans fil sera dé-associé de l'AP (100 ; 200 ; 300 ; 400).

**12.** Procédé selon la revendication 11, dans lequel les informations de déploiement comprennent un tuple comprenant une indication de RSSI telle que mesurée par l'AP (100 ; 200 ; 300 ; 400) dans la liaison montante et dans lequel l'étape (S2) de décision comprend l'étape suivante :

- la mesure (S21) de la RSSI du signal transportant les informations de déploiement ; et
- la mise en relation (S22) de la valeur de RSSI telle que mesurée dans la liaison montante avec une valeur de la RSSI mesurée dans la liaison descendante pour déterminer une valeur de décalage de RSSI ; et
- le lancement (S23) d'un balayage pour un AP alternatif dans le WLAN quand une RSSI mesurée dans la liaison descendante approche la valeur du seuil de dé-association obtenu plus la valeur de décalage de RSSI déterminée.

**13.** Procédé selon l'une quelconque des revendications 11 ou 12, dans lequel ledit seuil de dé-association est fixé sur la base d'informations concernant les informations de déploiement.

**14.** Point d'accès, AP, (100 ; 200 ; 300 ; 400) dans un réseau local sans fil, WLAN, comprenant une pluralité d'AP, dans lequel l'AP (100, 200, 300, 400) est configuré pour fournir à un dispositif de communication sans fil (1000 ; 2000 ; 3000 ; 4000) desservi par ledit AP, (100, 200, 300, 400) des informations de déploiement comprenant la qualité de service minimale pour laquelle le WLAN a été conçu et déployé pour permettre audit dispositif de communication sans fil (1000 ; 2000 ; 3000 ; 4000) de décider, sur la base au moins des informations de déploiement, si lancer un balayage pour un AP différent dans le WLAN pour se connecter, quand le dispositif sans fil rencontre une qualité de service qui est inférieure à celle indiquée dans les informations de déploiement.

**15.** Dispositif de communication sans fil (1000 ; 2000 ; 3000 ; 4000) desservi par un point d'accès, AP, (100 ; 200 ; 300 ; 400) dans un réseau local sans fil, WLAN, comprenant une pluralité d'AP, dans lequel

- le dispositif de communication sans fil (1000 ; 2000 ; 3000 ; 4000) est configuré pour obtenir des informations de déploiement concernant le WLAN à partir dudit point d'accès, les informations de déploiement comprenant la qualité de service minimale pour laquelle le WLAN a été conçu et déployé ; et
- le dispositif de communication sans fil (1000 ; 2000 ; 3000 ; 4000) est configuré pour décider, sur la base des informations de déploiement obtenues, si lancer un balayage pour un AP différent dans le WLAN pour se connecter, quand le dispositif sans fil rencontre une qualité de service qui est inférieure à celle indiquée dans les informations de déploiement.

## Fig. 1

START

OBTAIN DEPLOYMENT INFORMATION RELEVANT TO WLAN — S1

DECIDE, AT LEAST PARTIALLY BASED ON THE DEPLOYMENT INFORMATION, WHETHER TO INITIATE A SCAN FOR A DIFFERENT AP WITHIN THE WLAN TO CONNECT TO — S2

END

*Fig. 2*

FROM S1

S2

MEASURE THE RSSI OF THE SIGNAL CARRYING THE DEPLOYMENT INFORMATION — S21

IRELATING THE VALUE OF RSSI MEASURED IN THE UPLINK WITH THE VALUE OF THE MEASURED RSSI TO DETERMINE A RSSI OFFSET VALUE — S22

INITIATE A SCAN FOR AN ALTERNATIVE AP WHEN A RSSI AS MEASURED IN THE DOWNLINK APPROACHES THE DE-ASSOCIATION THRESHOLD PLUS THE DETERMINED RSSI OFFSET VALUE — S23

END

*Fig. 3*

**Fig. 4A**

**(A)**

**Fig. 4B**

**(B)**

MEMORY   _320_

SW

DATA

_310-1_
PROCESSOR

_330-1_
HW CIRCUITRY
(ASIC/FPGA)

_310-2_
PROCESSOR

_330-2_
HW CIRCUITRY
(ASIC/FPGA)

ACCESS POINT                    _300_

## Fig. 5

*Fig. 6*

(B)

**Fig. 7A**

**Fig. 7B**

(C)

MEMORY  *3200*

SW

DATA

*3100-1*
PROCESSOR

*3300-1*
HW CIRCUITRY
(ASIC/FPGA)

*3100-2*
PROCESSOR

*3300-2*
HW CIRCUITRY
(ASIC/FPGA)

WIRELESS
COMMUNICATION DEVICE

*3000*

Fig. 8
(D)

COMPUTER
PROGRAM
4350

4300

PROCESSOR
4100

I/O
4400

COMPUTER
PROGRAM
4250

MEMORY
4200

WIRELESS
COMMUNICATION DEVICE

4000

Fig. 9

OUTPUT MODULE
510

PREPARING
MODULE
520

APPARATUS                    500

Fig. 10

Fig. 11

ACCESS
POINT 100

WIRELESS
COMMUNICATION
DEVICE1000

ALTERNATIVE
ACCESS
POINT

DEPLOYMENT
INFORMATION

REQUEST FOR
CONNECTION

Fig. 12

**REFERENCES CITED IN THE DESCRIPTION**

**Patent documents cited in the description**

- EP 1349412 A2